# FASCICULE DE BREVET EUROPEEN

(11) **EP 2 238 357 B1**
(45) Date de publication et mention de la délivrance du brevet: **25.01.2012**
(21) Numéro de dépôt: 08873310.0
(22) Date de dépôt: 19.12.2008
(51) Int. Cl.: F16B 5/12, F16B 21/09

(54) **CLIP DE FIXATION MONOBLOC À DEUX POSITIONS DE MAINTIEN ET À ÉLÉMENT D'ACCROCHAGE BASCULANT, BAGUETTE DE CARROSSERIE EN COMPORTANT**
EINZELSTÜCKBEFESTIGUNGSKLEMME MIT ZWEI HALTEPOSITIONEN UND EINEM NEIGBAREN FIXIERTEIL SOWIE KAROSSERIEPROFIL DAMIT
SINGLE-PIECE FASTENING CLIP HAVING TWO HOLDING POSITIONS AND A TILTING ATTACHMENT MEMBER, AND BODYWORK PROFILE INCLUDING SAME

(30) Priorité: 04.01.2008 FR 0800044
(43) Date de publication de la demande: 13.10.2010
(73) Titulaire: Rehau SA, 57340 Morhange (FR)
(72) Inventeur: LERAY, Nicolas, F-57660 Grening (FR)
(74) Mandataire: Metz, Paul
(86) Numéro de dépôt international: PCT/FR2008/001796
(87) Numéro de publication internationale: WO 2009/112648

(56) Documents cités:
- FR-A- 2 839 481
- FR-A- 2 887 598

## Description

La présente invention concerne un clip de fixation à deux positions de maintien, formé d'une partie de base et d'un élément d'accrochage basculant réunis par un film formant charnière et moulés d'une seule pièce. Ce clip est destiné principalement aux baguettes, moulures, enjoliveurs de ceinture de caisse ou de bas de caisse pour véhicules routiers notamment du type automobile.

L'invention se rapporte également à une baguette de protection ou d'enjolivement ou à tout autre élément à rapporter sur la carrosserie d'un véhicule routier notamment du type automobile, comportant de tels clips de fixation à deux positions.

Les baguettes de protection ou d'enjolivement de ce type sont des pièces en matière plastique réalisées par moulage par injection, conçues pour être montées fixes sur la carrosserie d'un véhicule.

Dans la pratique actuelle, ces baguettes de protection ou d'enjolivement sont peintes après moulage, sur leur lieu de fabrication ou chez un sous-traitant au moyen d'une ligne spécifique de mise en peinture.

Les baguettes sont alors livrées finies sur le site d'assemblage où elles sont montées sur le support correspondant, généralement la carrosserie d'une voiture, préalablement traité et peint de manière indépendante.

Cette façon de faire est particulièrement onéreuse, car elle nécessite une opération de peinture indépendante de celle du support et une logistique importante pour la mettre en oeuvre et pour fournir dans le bon ordre, des baguettes de la bonne couleur, au niveau de la chaîne d'assemblage.

En outre, il arrive parfois que, malgré une opération préalable, longue et délicate, de mise au point et d'harmonisation des teintes, la baguette et son support, qui sont peints séparément et selon des techniques différentes, présentent des légères variations de teinte qui ne sont plus acceptables par les constructeurs automobiles. De tels écarts peuvent provenir, par exemple, de faibles différences d'épaisseur des couches de peinture ou de l'emploi de gammes de peinture spécifiques pas exactement identiques.

Le but de l'invention est de proposer une baguette de protection, d'enjolivement ou autre qui peut être montée sur la carrosserie avant que cette dernière ne subisse les différentes opérations de traitement et de peinture. La baguette peut ainsi être traitée et peinte en même temps que la carrosserie sur laquelle elle est montée.

Un tel procédé est nettement plus économique, car il supprime la nécessité d'une ligne spécifique supplémentaire de mise en peinture pour les baguettes. De plus, il assure une parfaite harmonie des teintes entre la carrosserie et la baguette.

La baguette peut être montée sur la carrosserie avant ou après le traitement anti-corrosion de la carrosserie par cataphorèse, mais avant les opérations de mise en peinture de finition (base métallisée ou laque, puis vernis) préférentiellement réalisées par pulvérisation électrostatique de la peinture.

Pour que cette technique soit envisageable, la baguette ne doit pas gêner par sa présence les différentes opérations de traitement et de peinture de la carrosserie, notamment sur la partie de carrosserie se trouvant à proximité de la baguette ou masquée à l'arrière de celle-ci.

Pour cela, la baguette doit pouvoir être prémontée fixe sur la carrosserie à une certaine distance de celle-ci de manière que la baguette, ainsi que la totalité de la surface de la carrosserie puissent subir les opérations de traitement, notamment la cataphorèse, et puissent être revêtues de peinture, de laque et/ou de vernis.

Dans cette position, les zones de contact entre les clips de fixation et la carrosserie doivent être réduites le plus possible, afin d'éviter que des parties de la carrosserie né soient pas traitées.

En outre, cette baguette doit être capable de supporter sans détérioration les conditions parfois sévères de traitement de la carrosserie, la cataphorèse impliquant notamment un passage au four à une température de l'ordre de 200°C.

Elle doit ensuite pouvoir être placée facilement et rapidement en position finale d'utilisation, c'est-à-dire plaquée contre la carrosserie, avec un maintien suffisant pour résister aux conditions de roulage et aux efforts mécaniques divers auxquels elle peut être exposée par la suite, par exemple le frottement de rouleaux de lavage.

Par la demande FR 2.839.481 au nom d'ARIES, on connaît une baguette destinée à être montée sur la carrosserie d'un véhicule automobile qui répond à ce problème technique. Sur sa face interne, cette baguette comporte d'une part deux organes de prémontage coopérant avec des orifices spécifiques de la carrosserie qui permettent de maintenir la baguette dans une position écartée de son support. Elle comporte d'autre part une série de clips de blocage, coopérant avec un autre type d'orifices de la carrosserie, de manière à assurer la fixation de la baguette en position finale de verrouillage contre la carrosserie après avoir subi une poussée perpendiculaire au support.

Les deux organes de prémontage de cette réalisation antérieure sont formés chacun d'une pièce d'emboîtement préalablement mise en place sur l'orifice correspondant de la carrosserie, et d'une seconde pièce cylindrique rattachée à la baguette, susceptible de coulisser dans la pièce d'emboîtement et comportant en extrémité un ergot destiné à coopérer avec un creux de la pièce d'emboîtement.

Pour monter cette baguette en position écartée, l'opérateur insère la partie cylindrique de chacun des organes de prémontage dans la pièce d'emboîtement correspondante et exerce sur la baguette une poussée perpendiculaire à la carrosserie, dite « en Y jusqu'à ce que l'ergot des parties cylindriques se bloque dans les creux correspondants des deux pièces d'emboîtement.

Une fois les opérations de peinture terminées, l'opérateur exerce une seconde poussée perpendiculaire à la carrosserie qui provoque la sortie des ergots de prémontage hors de leur logement et l'insertion des clips de blocage dans les orifices correspondants de la carrosserie, de manière à placer la baguette en position finale de verrouillage contre la carrosserie.

Une telle réalisation permet de répondre au problème technique. Cependant, en position écartée de prémontage, la baguette ARIES n'est soutenue sur toute sa longueur, qu'à deux endroits correspondant à l'emplacement des organes de prémontage. Ce maintien est assez limité et peut s'avérer insuffisant lors du passage dans le bain de cataphorèse où la baguette peut se décrocher du fait des remous engendrés par le déplacement de la voiture dans le bain, ou dans le four de cataphorèse où la baguette peut s'affaisser entre les deux points de fixation.

En outre, pour placer la baguette en position écartée de prémontage, puis pour la mettre en position plaquée de verrouillage, l'opérateur doit effectuer dans les deux cas un mouvement de même nature : une poussée « en Y » perpendiculaire au support.

Lors du prémontage, l'opérateur doit doser son effort de poussée pour que les parties cylindriques des organes de prémontage ne coulissent pas trop loin dans les pièces d'emboîtement et que les ergots des parties cylindriques ne dépassent pas leur position de réception dans les creux des pièces d'emboîtement.

Cette opération étant relativement délicate et menée à une cadence très rapide, il arrive que certaines baguettes se retrouvent trop près de la carrosserie et gênent ensuite les opérations de traitement et de peinture de la zone de carrosserie située derrière.

Le but de l'invention est de fournir une autre solution, plus avantageuse, pour résoudre ce problème technique.

On connaît également les clips bien plus avantageux divulgués dans la demande de brevet antérieure FR 2. 887.598 au nom de REHAU SA, avec les caracteristiques du préambule de la revendication 1.

Ces clips sont formés de deux parties indépendantes : une pièce de base moulée d'une pièce avec la face arrière de la baguette et un élément d'accrochage comportant une platine d'étanchéité et une tête de clip conçue pour coopérer avec une ouverture de la carrosserie en forme de « trou de serrure ». L'élément d'accrochage peut être monté sur la pièce de base à deux hauteurs différentes grâce à une structure d'encliquetage à deux crans.

La baguette comporte plusieurs de ces clips répartis sur toute sa longueur. Elle est placée en position écartée de prémontage, par engagement de la tête des clips dans la partie large des ouvertures de la carrosserie puis par un coulissement longitudinal « en X » de la baguette faisant passer les clips dans la partie étroite des ouvertures.

Après traitement et/ou peinture, l'opérateur doit exercer une poussée « en Y » perpendiculaire à la carrosserie sur la baguette pour la plaquer en position finale d'utilisation.

Avec de tels clips la baguette est avantageusement maintenue sur toute sa longueur, même en position écartée de prémontage.

En outre, deux mouvement différents sont nécessaires pour placer la baguette en position écartée de prémontage (coulissement en X) et en position plaquée finale d'utilisation (poussée en Y), ce qui limite les risques d'erreur de la part de l'opérateur.

Cependant, un tel clip à deux positions présente encore certains inconvénients. En position écartée de prémontage, le clip est en appui sur les bords de l'ouverture de carrosserie au niveau de l'ensemble de la face inférieure de sa tête de clip empêchant tout traitement et/ou peinture de cette zone.

En outre, sa platine d'étanchéité, portée par l'élément d'accrochage, se trouve relativement proche de la carrosserie même en position écartée de prémontage. Elle gêne par sa présence le traitement de la carrosserie située à l'arrière de celle-ci.

Le but de l'invention est de fournir un autre clip à deux positions ne présentant pas ces inconvénients.

Pour résoudre ce problème technique, l'invention fournit un clip de fixation destiné à assurer la fixation sur un support, plus particulièrement sur la carrosserie d'un véhicule routier notamment du type automobile à traiter par cataphorèse et/ou à peindre, d'un élément linéaire décoratif ou fonctionnel, par exemple du type baguette, bande, moulure, enjoliveur de ceinture de caisse ou de bas de caisse.

Ce clip de fixation comprend une partie de base destinée à être rapportée sur la face intérieure de l'élément linéaire et un élément d'accrochage comportant une tête de clip conçue pour coopérer avec une ouverture de montage du type en « trou de serrure » présentant une zone large et une zone étroite ménagée en regard dans le support.

La partie de base et l'élément d'accrochage comportent des moyens complémentaires de verrouillage conduisant à deux positions stables du clip qui correspondent à deux positions de montage de l'élément linéaire sur son support, à savoir une position écartée de prémontage à distance du support et une position finale d'utilisation plaquée contre le support.

Selon l'invention, la partie de base et l'élément d'accrochage sont moulés d'une seule pièce et reliés entre eux de manière articulée par une zone de faible épaisseur formant charnière et permettant le basculement de l'élément d'accrochage par rapport à la partie de base entre une position haute inclinée de prémontage et une position basse de montage final qui correspondent aux deux positions stables du clip.

L'invention fournit également un élément linéaire décoratif ou fonctionnel, par exemple du type baguette, bande, moulure, enjoliveur de ceinture de caisse ou de bas de caisse, destiné à être rapporté contre et monté sur un support et plus particulièrement sur la carrosserie d'un véhicule routier notamment du type automobile à traiter par cataphorèse et/ou à peindre, qui comporte sur sa face intérieure au moins un clip de fixation à deux positions de maintien selon l'invention.

Avantageusement, le clip selon l'invention peut comporter une platine d'étanchéité portée par la partie de base du clip et se trouvant ainsi à distance du support en position écartée de prémontage et en contact avec celui-ci en position de verrouillage.

Grâce à la conception particulièrement inventive du clip selon l'invention, l'élément d'accrochage basculant est incliné en position de prémontage. De ce fait, dans cette position, les surfaces de contact entre l'élément d'accrochage et la tôle de carrosserie sont réduites en nombre et en surface à des contacts quasiment ponctuels. Les produits de traitement et/ou de peinture peuvent ainsi être appliqués sur sensiblement toute la superficie du support.

En outre, le clip peut avantageusement être monté par coulissement sur deux nervures longitudinales de la face arrière de l'élément linéaire, ce qui autorise une translation du clip en cas de dilatation de l'élément linéaire différente de celle du support et notamment dans le four de cataphorèse.

Par ailleurs, une structure élastique de butée apporte de préférence un auto-ajustement du clip en position sur la baguette, lui permettant au prémontage de se centrer automatiquement par rapport à l'ouverture de montage malgré des variations de position de celle-ci dues à la tolérance mécanique autorisée pour la carrosserie.

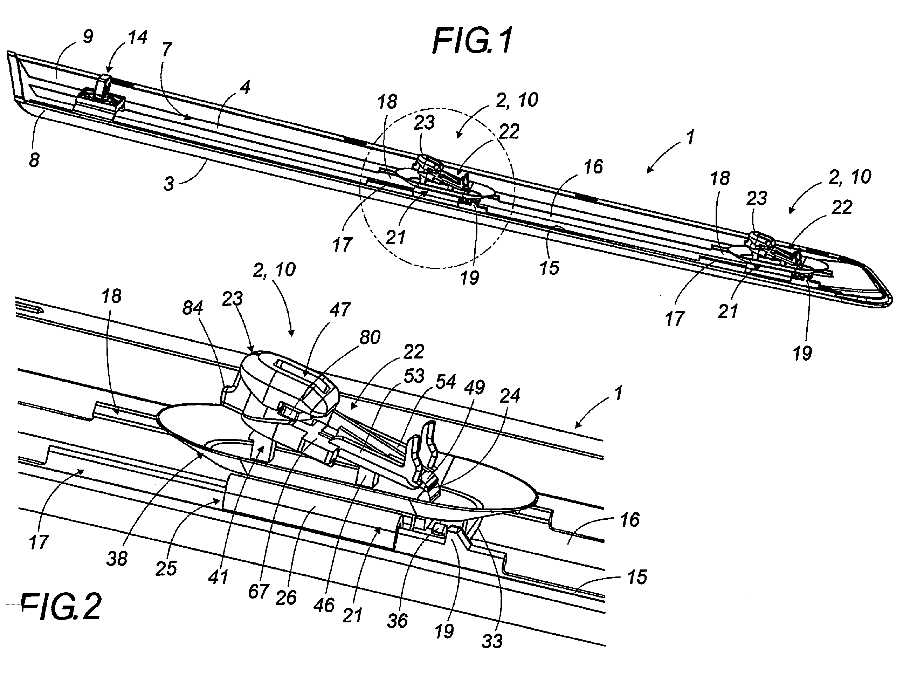

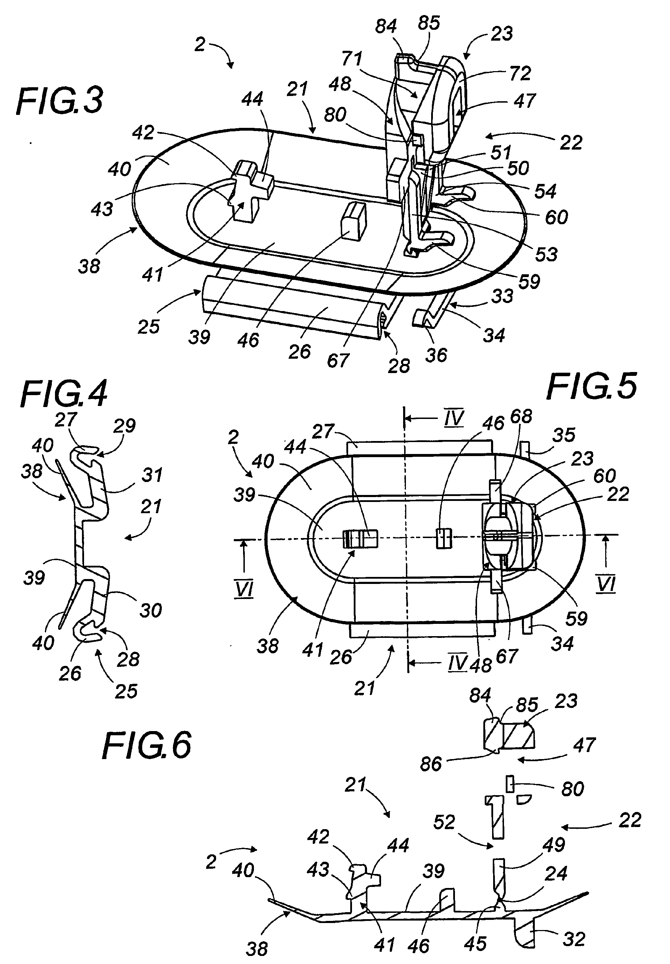

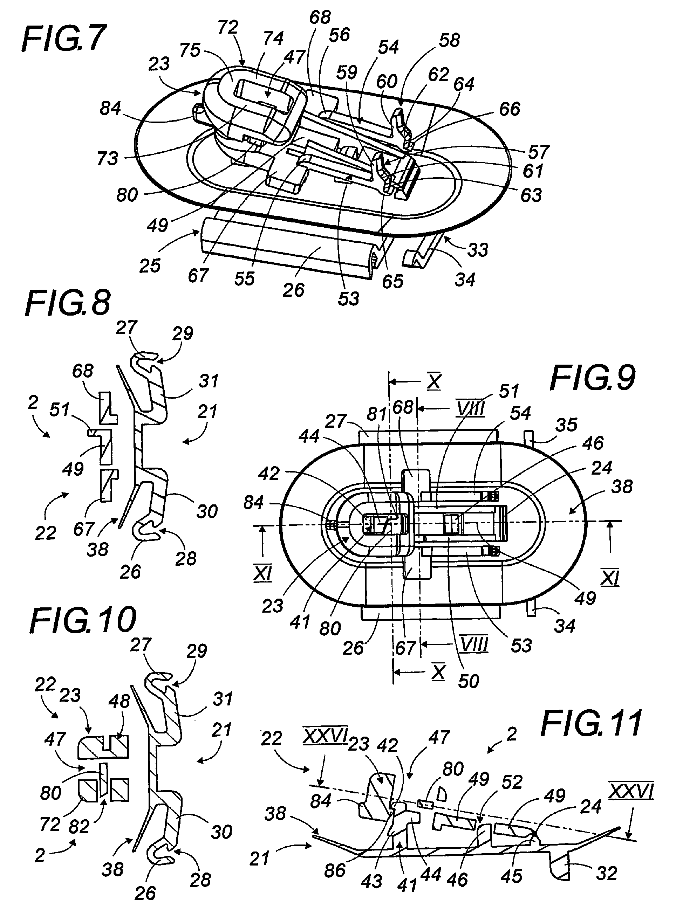

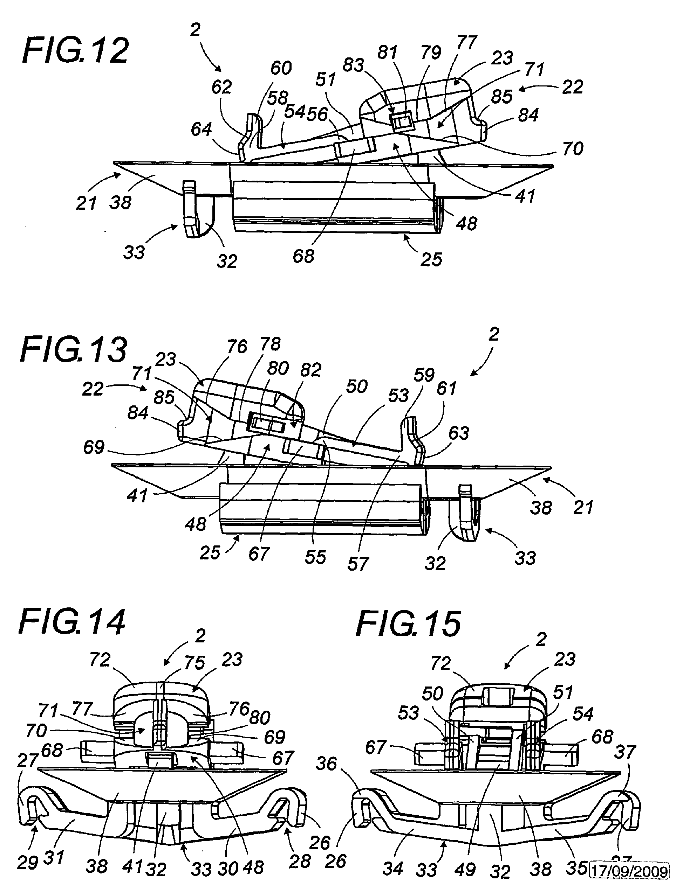

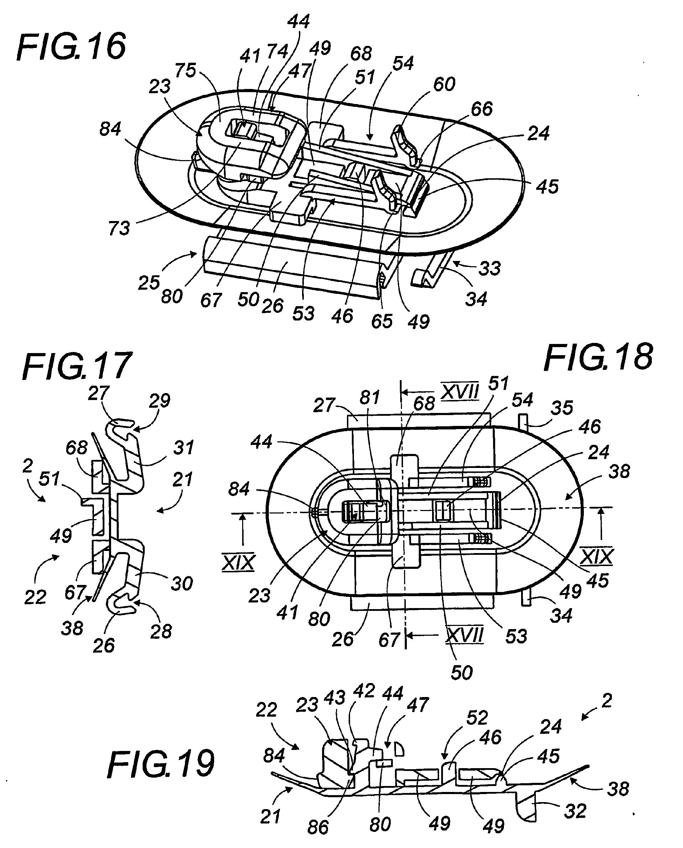

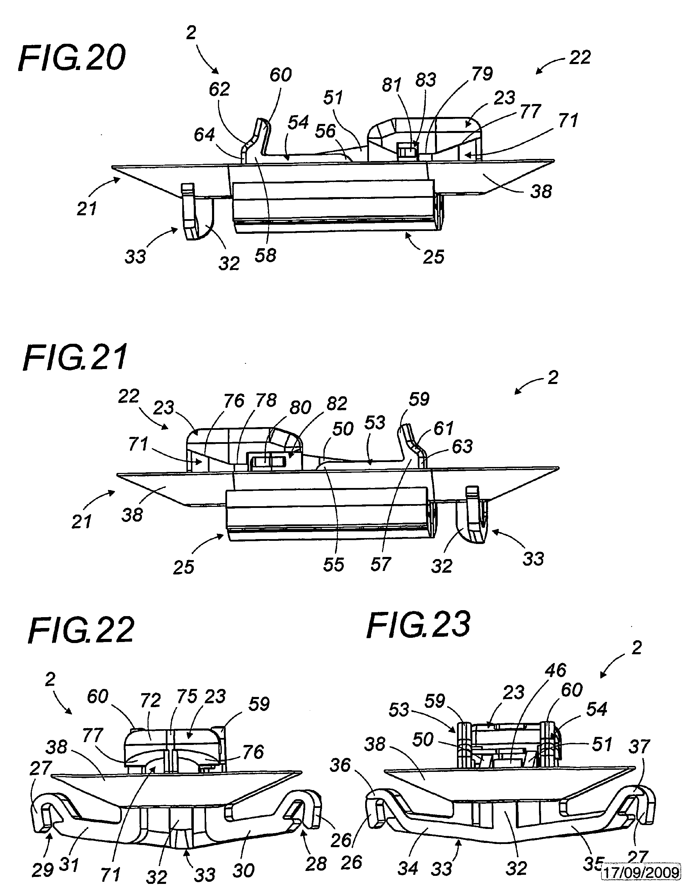

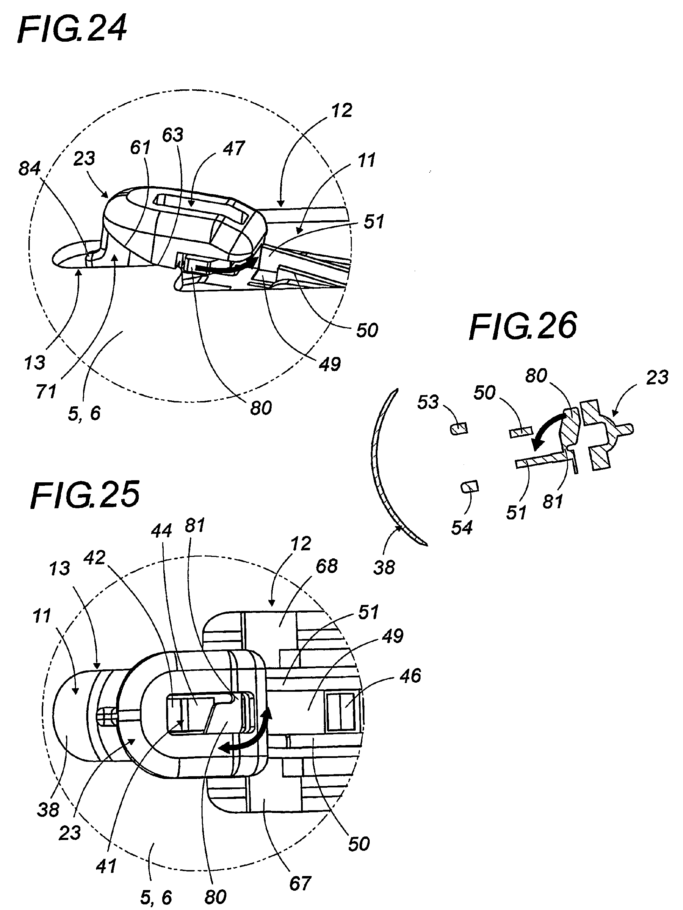

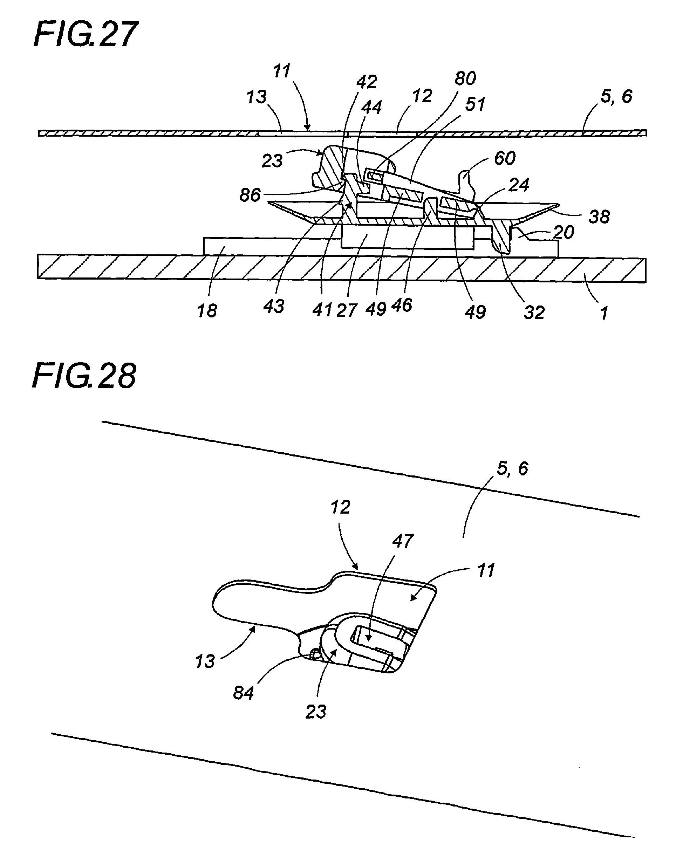

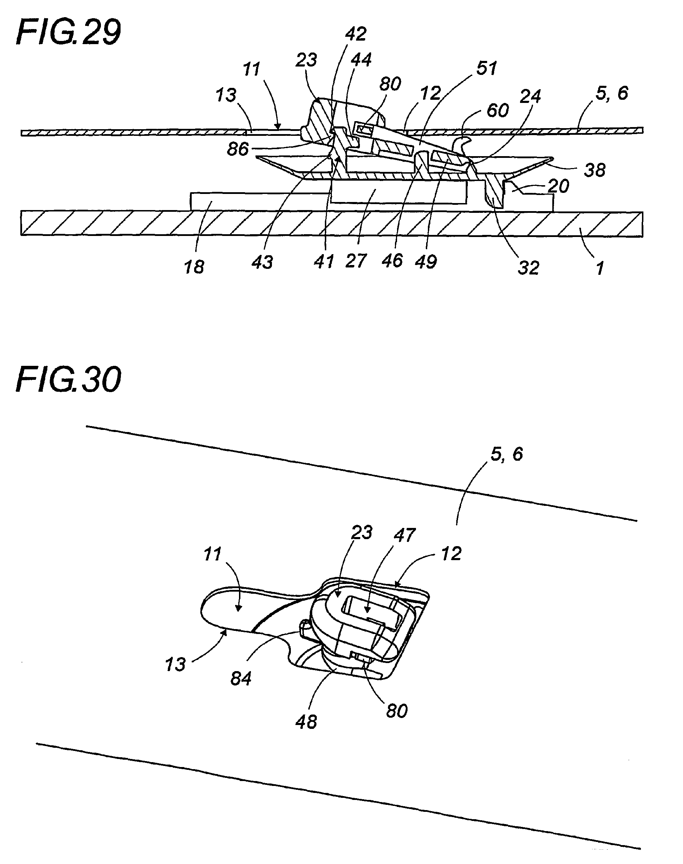

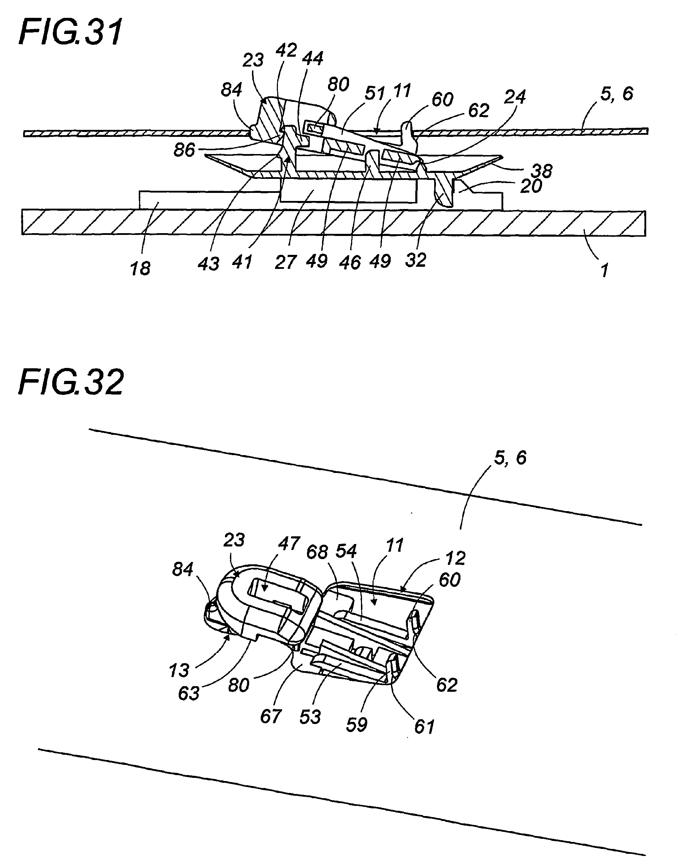

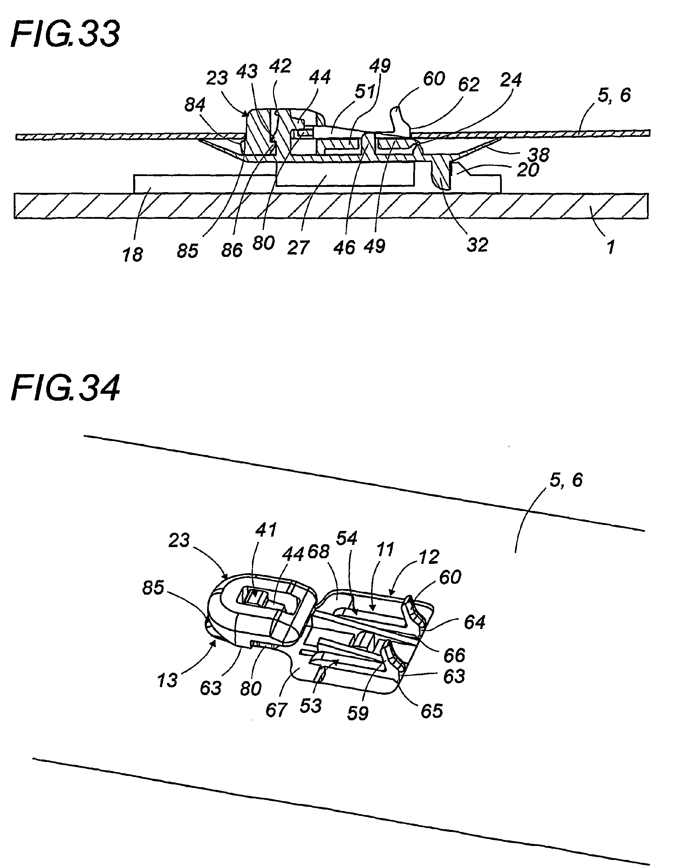

D'autres caractéristiques et avantages de l'invention apparaîtront à la lecture de la description détaillée qui va suivre, description faite en référence aux dessins annexés, dans lesquels :
. la figure 1 est une vue générale en perspective de la face intérieure d'une baguette équipée de clips de fixation selon l'invention ;
. la figure 2 est un agrandissement du détail encerclé de la figure 1, illustrant en perspective un clip de fixation selon l'invention monté sur les deux rails d'une zone de coulissement ;
. les figures 3 à 6 sont des vues, respectivement en perspective, en coupe transversale selon l'axe IV-IV de la figure 5, de dessus et en coupe longitudinale selon l'axe VI-VI de la figure 5, d'un clip de fixation selon l'invention en position de moulage ;
. les figures 7 à 15 sont des vues, respectivement en perspective, en coupe transversale selon l'axe VIII-VIII de la figure 9, de dessus, en coupe transversale selon l'axe X-X de la figure 9, en coupe longitudinale selon l'axe XI-XI de la figure 9, du côté droit, du côté gauche, de l'avant et de l'arrière, d'un clip de fixation selon l'invention en position inclinée de prémontage ;
. les figures 16 à 23 sont des vues, respectivement en perspective, en coupe transversale selon l'axe XVII-XVII de la figure 18, de dessus, en coupe longitudinale selon l'axe XIX-XIX de la figure 18, du côté droit, du côté gauche, de l'avant et de l'arrière, d'un clip de fixation selon l'invention en position basse de montage final ;
. les figures 24 et 25 sont des vues en perspective, respectivement de côté et de dessus, d'un agrandissement d'un clip selon l'invention au niveau de sa tête de clip en prise avec le bord longitudinal de l'ouverture de montage, illustrant schématiquement le fonctionnement de la gâchette ;
. la figure 26 est une vue en coupe inclinée selon l'axe XXVI-XXVI de la figure 11, passant au niveau de la gâchette d'un clip selon l'invention ;
. les figures 27 à 34 sont des vues schématiques, à chaque fois en coupe longitudinale et en perspective, illustrant les étapes successives de la pose d'une baguette équipée d'un clip selon l'invention sur une carrosserie, à savoir :
   - pour les figures 27 et 28: l'approche du clip en face d'une ouverture de montage,
   - pour les figures 29 et 30 : l'engagement de la tête de clip dans l'ouverture de montage,
   - pour les figures 31 et 32: la- position écartée de traitement dans laquelle l'élément d'accrochage est calé en présentation inclinée contre chaque bord de l'ouverture de montage, obtenue après translation de la tête de clip dans la partie étroite de l'ouverture de montage,
   - pour les figures 33 et 34 : la position finale plaquée d'utilisation dans laquelle l'élément d'accrochage est en position basse sur la partie de base du clip.

La baguette et le clip de fixation selon la présente invention vont maintenant être décrits de façon détaillée en référence aux figures 1 à 34. Les éléments équivalents représentés sur les différentes figures porteront les mêmes références numériques.

La présente invention se rapporte de façon générale à un élément linéaire à fixer sur un support et plus particulièrement sur la carrosserie d'un véhicule routier à traiter par cataphorèse et/ou à peindre.

Par élément linéaire on entend plus particulièrement tout élément décoratif et/ou fonctionnel par exemple du type baguette, bande, moulure et autre que l'on fixe sur les portes, les ceintures de caisse, les bas de caisse ou autres parties de la carrosserie d'un véhicule routier. Pour des raisons de commodité on regroupera tous ces objets par le seul terme de baguette.

De la même façon, cet élément linéaire peut être rapporté et fixé sur tout support présentant les orifices appropriés. Cependant, l'application préférentielle visée concernant la carrosserie d'un véhicule, ce support sera désigné par la suite par le terme de carrosserie.

Sur les différentes figures, on a représenté des clips de fixation et une baguette constituant des modes de réalisation préférentiels de l'invention. Il doit cependant être bien compris que ces figures ainsi que la description détaillée de celles-ci ne sont données qu'à titre d'exemple et ne sont en rien limitatives de la portée de l'invention définie par les revendications. Ainsi, par exemple, la tête de clip pourrait présenter toute autre forme appropriée pour coopérer avec l'ouverture correspondante de la carrosserie.

Par convention dans cette description, on désignera par faces avant et arrière du clip les faces de celui-ci dirigées respectivement vers la partie étroite et vers la partie large de l'ouverture de montage en forme de trou de serrure, lorsque le clip est monté sur la carrosserie. Les notions de haut et de bas seront définies en fonction de l'orientation du clip tel que représenté sur les figures.

Un exemple d'une baguette 1 comportant un ensemble de clips de fixation 2 selon l'invention a été représenté sur la figure 1.

Cette baguette 1 est une pièce allongée qui comporte une face extérieure 3 visible lorsque la baguette est montée, par exemple bombée convexe, et une face intérieure 4, par exemple concave, appliquée contre un support récepteur 5 par exemple la tôle d'une carrosserie 6.

Le corps de la baguette 1 définit ainsi du côté de sa face intérieure 4 un volume intérieur creux 7 longitudinal, continu et ouvert, destiné à être placé en direction du support 5, délimité sur les côtés par deux rebords 8 et 9 longitudinaux, sensiblement verticaux ou obliques selon les exigences de style.

La baguette 1 comporte sur sa face intérieure 4 des moyens de fixation 10 de la baguette sur le support 5. Selon l'invention, ces moyens de fixation 10 sont des clips de fixation 2 à deux positions de maintien.

Pour assurer le montage et la fixation de la baguette 1 sur le support 5, ces clips de fixation 2 sont conçus pour coopérer avec une série d'ouvertures de montage 11 prévues en regard dans le support 5, préférentiellement la tôle de la carrosserie 6, notamment au niveau des portes ou des bas de caisse.

De façon connue, la forme de ces ouvertures de montage 11 est du type en « trou de serrure ». Elles présentent ainsi une zone large 12 sensiblement rectangulaire, prolongée en partie médiane par une zone étroite 13.

Les clips de fixation 2 existent en plusieurs endroits, de préférence sur sensiblement toute la longueur du corps de la baguette 1, de manière à garantir un maintien uniforme et solide de la pièce moulée contre le support 5. Ils sont disposés selon un espacement prédéterminé correspondant à celui des ouvertures de montage 11 avec lesquelles ils se retrouvent en vis-à-vis lorsque la baguette est positionnée contre son support 5.

Sur la figure 1, on a représenté une baguette 1 avec deux clips de fixation 2. Néanmoins, suivant les modèles de baguette et les possibilités d'ouverture de montage 11 dans le support 5, ces clips 2 peuvent être en nombre différent et disposés différemment.

La baguette 1 représentée comporte en outre à l'une de ses extrémités un moyen d'indexation longitudinale 14, également appelé dispositif de fixation positive. Sur l'exemple représenté, il s'agit d'un dispositif de type à « quart de tour». Néanmoins, tout autre dispositif de fonction équivalente peut être utilisé et par exemple un dispositif d'encliquetage du type marteau, fût, croix, un élément vissé ou tout autre dispositif adapté.

De façon optionnelle, ce moyen d'indexation longitudinale 14 peut être suffisamment long pour également immobiliser longitudinalement la baguette lorsqu'elle se trouve en position écartée. Dans ce cas, il participe aussi à la fixation de la baguette sur la carrosserie durant les opérations de mise en peinture.

La baguette 1 présente sur sa face intérieure 4, des structures parallèles, par exemple des nervures 15 et 16, sur lesquelles sont montés les clips de fixation 2 selon l'invention et qui permettent de maintenir latéralement les clips tout en autorisant un certain déplacement longitudinal de ceux-ci destiné à absorber l'allongement dû à la dilatation thermique.

Les moyens particuliers représentés sur les figures sont deux nervures longitudinales 15 et 16, préférentiellement minces pour éviter les retassures et qui s'étendent de préférence sur sensiblement toute la longueur de la baguette 1. Ces nervures longitudinales 15 et 16 forment localement des tronçons de rail de coulissement 17 et 18, de hauteur supérieure, qui constituent les zones de montage des clips 2 selon l'invention. Leur nombre et leur emplacement sont fonction de la longueur de la baguette et des possibilités d'ouverture dans le support 5.

Chaque tronçon de rail de coulissement 17 ou 18 présente à la même extrémité, conformé dans sa structure, un butoir arrière 19 ou 20 sous la forme d'une saillie à front plan d'arrêt pour la partie de base du clip de fixation 1 ou un élément élastique faisant partie de cette partie de base.

De manière optionnelle, l'autre extrémité de chaque tronçon de rail 17 ou 18 peut également présenter au moins une surépaisseur locale (non représentée) également conformée dans la matière du rail, servant de butée d'immobilisation du clip de fixation 2. Ces deux surépaisseurs locales sont peu importantes de manière à pouvoir être franchissables par la partie de base du clip de fixation 2 lors de son coulissement sur la baguette 1. Elles ne constituent chacune qu'une butée provisoire permettant avec le butoir 19 ou 20 l'immobilisation du clip de fixation 2 par exemple lors du transport, du stockage et de la manipulation de la baguette avant sa pose.

Chaque clip de fixation 2 comprend une partie de base 21 destinée à être montée déplaçable longitudinalement sur les tronçons de rails 17 et 18 de la face intérieure 4 de la baguette 1, et un élément d'accrochage 22 présentant une tête de clip 23 conçue pour s'engager dans l'ouverture de montage 11 correspondante du support 5 afin d'assurer le maintien de la baguette 1.

Selon l'invention, la partie de base 21 et l'élément d'accrochage 22 du clip 2 sont moulés d'une seule pièce et reliés entre eux de manière articulée par une zone de faible épaisseur 24, appelée film, qui forme charnière et permet le basculement de l'élément d'accrochage 22 par rapport à la partie de base 21 entre deux positions stables, à savoir une position haute inclinée de prémontage et une position basse de montage final.

On découvrira ci-après et à l'aide des dessins, la structure particulière d'un mode de réalisation préférentiel du clip basculant à deux positions selon l'invention.

La partie de base 21 comprend en partie basse un coulisseau 25 monté à coulissement sur les deux tronçons de rail de coulissement 17 et 18.

A cet effet, le corps du coulisseau 25 comporte le long de ses côtés longitudinaux deux conformations en tubes de coulissement 26 et 27 destinées à venir s'enclipser chacune sur un tronçon de rail 17,18 s'étendant longitudinalement sur la face intérieure 4 de l'élément linéaire 1.

Pour cela, les tubes de coulissement 26 et 27 sont préférentiellement ouverts chacun en partie inférieure selon une fente 28 et 29 dont l'ouverture présente des structures longitudinales d'encliquetage de forme complémentaire à celle de la tête des tronçons de rail 17 et 18. Les deux tubes de coulissement 26 et 27 sont reliés chacun au reste de la partie de base 21 par un pont de matière respectivement 30 et 31.

Avantageusement, la partie de base 21 peut comporter en outre une structure élastique de butée 33 permettant un auto-ajustement du clip 2 monté sur l'élément linéaire 1. Cette structure 33 est située préférentiellement en sous-face et à l'arrière de la partie de base 21.

Elle comporte de préférence une arête médiane 32 prolongée par deux branches transversales flexibles 34 et 35 venant porter chacune, par son extrémité libre conformée en crochet 36 ou 37, à libre coulissement sur le tronçon de rail correspondant 17 ou 18 et entrant en contact de butée avec le butoir 19 ou 20 conformé dans chaque tronçon de rail.

Chaque branche 34 et 35 est flexible, ce qui apporte, comme on le verra ci-après, une liberté de déplacement longitudinal du clip au-delà du butoir 19 ou 20 permettant au clip de fixation 2 d'ajuster sa position par rapport à l'ouverture de montage 11 et d'absorber ainsi les variations en position des bords de l'ouverture de montage liées à la tolérance mécanique définie par le constructeur.

La partie de base 21 peut avantageusement se poursuivre vers le haut par une platine d'étanchéité 38 à fond 39 de préférence sensiblement plat et à bordure périphérique 40 préférentiellement remontante et dirigée vers l'ouverture de montage.

Cette platine d'étanchéité 38 est destinée à recouvrir à obturation l'ouverture de montage 11 de la carrosserie lorsque la baguette 1 se trouve en position plaquée définitive, afin de limiter l'entrée d'eau et de saletés à l'intérieur de la carrosserie et d'atténuer la transmission des bruits.

Un doigt d'encliquetage 41 se dresse préférentiellement du fond 39 de cette platine d'étanchéité 38 et à l'avant de celle-ci. Il comporte un moyen de verrouillage qui coopère avec un moyen de verrouillage complémentaire porté par l'élément d'accrochage 22 afin d'obtenir les deux positions stables de maintien du clip 2 selon l'invention.

Le doigt d'encliquetage 41 présente pour cela, sur son chant avant, deux conformations saillantes en crochet, respectivement haute 42 et basse 43, correspondant chacune à une position caractéristique de l'élément d'accrochage 22 basculant du clip 2.

Le doigt d'encliquetage 41 présente également sur son chant arrière un ergot de butée 44, dont la hauteur est intermédiaire entre celles des deux conformations en crochet 42 et 43, et dont la fonction sera explicitée par la suite.

Avantageusement, le chant avant du doigt d'encliquetage 41 peut être prévu légèrement incurvé vers l'arrière selon une forme dégageante pour faciliter le basculement de l'élément d'accrochage 22.

A l'arrière de la platine d'étanchéité 38 se trouve un pont de matière 45 constituant la liaison entre la partie de base 21 et l'élément d'accrochage 22. L'épaisseur de ce pont de matière 45 diminue progressivement jusqu'à former la zone de faible épaisseur ou film 24 servant de charnière et permettant le basculement de l'élément d'accrochage 22 par rapport à la partie de base 21.

De préférence, la partie de base 21 comporte encore un plot 46 qui s'élève en direction de l'élément d'accrochage 22 et est préférentiellement situé entre le doigt d'encliquetage 41 et le pont de matière 45 de liaison. Ce plot 46 permet de rigidifier verticalement l'ensemble du clip 2 lorsqu'il est monté sur le support 5 et de limiter les efforts verticaux subis par le film charnière 24 pendant le traitement de cataphorèse à haute température.

Avantageusement, avec une telle réalisation, la platine d'étanchéité 38 ne présente aucune ouverture ou fente de montage et est ainsi parfaitement étanche pour remplir sa fonction.

L'élément d'accrochage 22 basculant comporte la tête de clip 23 qui présente un évidemment central 47. La tête de clip 23 se prolonge vers le bas par un corps creux plus étroit dont la partie inférieure s'élargit en une base 48, préférentiellement en forme de platine, qui se poursuit à l'arrière par une bande de liaison 49 se prolongeant jusqu'à la zone de faible épaisseur 24 formant charnière.

Cette bande de liaison 49 est préférentiellement bordée par deux nervures de rigidification 50 et 51, dont la hauteur augmente progressivement en direction de la tête de clip 23 et qui servent à rigidifier cette dernière pendant le séjour à haute température dans le four de cataphorèse.

Sur l'exemple représenté, l'une de ces nervures, la nervure 50, est plus courte que l'autre pour des raisons techniques de moulage.

L'élément d'accrochage 22 présente également une ouverture 52, préférentiellement rectangulaire, située en regard du plot 46 de la partie de base 21 de manière que le plot 46 s'engage à travers cette ouverture 52 lorsque l'élément d'accrochage 22 bascule vers la partie de base 21. Lorsque le clip 2 est monté sur le support 5 et supporte le poids de la baguette 1, le bord supérieur de cette ouverture 52 se trouve en appui contre le plot 46 qui rigidifie l'ensemble.

De part et d'autre de la bande de liaison 49, il existe deux branches anti-recul 53 et 54 qui sont des branches flexibles de positionnement et de maintien. Ces branches anti-recul 53 et 54 présentent chacune une extrémité de raccordement, respectivement 55 et 56, reliée à l'élément d'accrochage 22 et une extrémité libre, respectivement 57 et 58, destinée à coopérer avec le bord transversal arrière de l'ouverture de montage 11.

Selon un mode préférentiel de réalisation, l'extrémité de raccordement 55, 56 de chaque branche anti-recul 53, 54 forme un coude de surélévation de la branche par rapport au plan principal de la bande de liaison 49 et son extrémité libre 57, 58 est conformée par exemple en tête de chien et présente vers le haut une pointe 59, 60 à chant arrière sensiblement plat suivie vers le bas par une rampe descendante d'engagement 61, 62 et un méplat 63, 64 terminé par un ergot de blocage 65, 66 formant ensemble un coin de calage.

De préférence, l'élément d'accrochage 22 comporte en outre deux ailes 67 et 68 à face supérieure d'appui sensiblement plane, qui s'étendent latéralement une de chaque côté de l'élément d'accrochage 22, par exemple au niveau des extrémités de raccordement 55 et 56 coudées des branches anti-recul 53 et 54. Ces ailes 67, 68 sont destinées à venir s'appuyer contre les bords de l'ouverture 11, une fois la tête de clip 23 engagée à travers la partie large de celle-ci à une profondeur adaptée pour réaliser l'étape suivante de coulissement. Elles procurent ainsi à l'opérateur un repère de profondeur d'enfoncement de la tête de clip 23, lors du montage de l'élément linéaire sur son support 5.

De préférence, une rampe inclinée 69, 70 montante, dans le sens allant de l'avant vers l'arrière, est conformée de chaque côté au niveau de la face supérieure de la base 48 située sous la tête de clip 23.

De la base 48 s'élève un corps creux 71 plus étroit dont la partie supérieure s'élargit par une bordure supérieure 72 épaisse afin de former la tête de clip 23 à évidement central 47 traversant.

L'évidement central 47 de la tête de clip 23 est situé en regard du doigt d'encliquetage 41 de la partie de base 21 du clip 2 et est adapté pour le recevoir lorsque l'élément d'accrochage 22 bascule en position haute inclinée de prémontage ou en position basse de montage final.

Selon une variante préférentielle de l'invention, la bordure supérieure 72 de la tête de clip 23 présente un corps de forme générale dite en « U couché » comprenant deux branches latérales 73, 74 réunies à l'avant par une portion centrale incurvée 75. Cette conformation garantit un effet avantageux de centrage lors de l'introduction des différentes têtes de clip 23 de la baguette 2 dans chaque zone large des ouvertures de montage 11 correspondantes du support 5.

De préférence, la tête de clip 23 présente de chaque côté conformées dans sa sous-face, dans le sens de l'avant vers l'arrière, une rampe descendante 76, 77 suivie d'un plat 78, 79 qui se trouvent au-dessus de la rampe montante 69, 70 correspondante de la base 48, l'ensemble de ces rampes forme ainsi une zone d'engagement pour les bords longitudinaux de l'ouverture de montage 11.

Selon un mode de réalisation préférentiel du clip selon l'invention, l'élément d'accrochage 22 comporte en outre un dispositif appelé gâchette 80 qui permet de bloquer l'élément d'accrochage 22 en position haute inclinée de prémontage jusqu'à la mise en place du clip sur son support et plus particulièrement jusqu'au coulissement du clip 2 vers la zone étroite 13 de l'ouverture de montage 11. Ce dispositif évite ainsi tout basculement involontaire et accidentel de l'élément d'accrochage 22 en position basse de montage final, pendant le stockage, le transport ou le montage du clip sur la baguette par exemple.

La gâchette 80 est une butée escamotable qui coopère avec l'ergot de butée 44 du doigt d'encliquetage 41 de la partie de base 21. Elle est située dans la partie arrière inférieure de la tête de clip 23 et est reliée à la tête de clip 23 par un bras flexible 81 permettant le recul de la gâchette 80 en position escamotée par un pivotement élastique vers l'arrière, illustré par les flèches noires des figures 24 à 26, sous l'effet d'un effort de poussée vers l'arrière exercé par le bord de l'ouverture de montage 11 lors du coulissement du clip 2 vers la zone étroite 13 de l'ouverture de montage 11.

Pour cela, la bordure 72 présente à ce niveau, de chaque côté de la tête de clip 23, une découpe 82 et 83 permettant le moulage et l'actionnement de la gâchette 80 et de son bras flexible 81.

Le front avant de l'élément d'accrochage 22 comporte en partie inférieure une saillie avant de butée 84, préférentiellement bombée et de faible largeur. La partie supérieure de cette saillie de butée 84 forme avantageusement avec le front avant de l'élément d'accrochage 22 un coin de calage 85 destiné à recevoir le bord transversal avant de l'ouverture de montage 11 une fois l'élément linéaire 1 plaqué contre le support 5 en position finale d'utilisation.

Selon l'invention, l'élément d'accrochage 22 comporte également un moyen de verrouillage qui coopère avec celui de la partie de base 21, à savoir ici le doigt d'encliquetage 41, pour garantir les deux positions de maintien du clip 2.

Dans le mode de réalisation représenté, il s'agit d'un rebord 86 faisant saillie de la paroi avant de l'évidement central 47 de la tête de clip 23, en direction du centre de l'évidement. Ce rebord 86 est adapté pour coopérer successivement avec les conformations saillantes en crochet haute 42 et basse 43 du doigt d'encliquetage 41 pour verrouiller l'élément d'accrochage 22 du clip, respectivement en position haute inclinée de prémontage et en position basse de montage final.

Avantageusement, la paroi inférieure de ce rebord 86 peut être conformée en rampe inclinée pour faciliter l'encliquetage.

Le clip 2 selon l'invention est avantageusement réalisé d'un seul tenant par moulage par injection. Il est préférentiellement moulé dans la position représentée sur les figures 3 à 6, l'élément d'accrochage 22 étant complètement dressé et sensiblement perpendiculaire à la pièce de base 21.

Après démoulage et refroidissement, le clip est placé dans sa première position stable qui correspond pour l'élément d'accrochage 22 à sa position haute inclinée de prémontage. Il s'agit d'une simple étape de basculement de l'élément d'accrochage 22 par pliage de la zone de faible épaisseur 24 formant charnière, qui peut être facilement automatisée.

Dans cette position, représentée sur les figures 7 à 15, le plot 46 de la partie de base 21 est engagé dans l'ouverture 52 de la bande de liaison 49 et la partie supérieure du doigt d'encliquetage 41 est engagée dans l'évidement central 47 de la tête de clip 23.

Comme illustré sur la figure 11, la conformation saillante en crochet haute 42 du doigt d'encliquetage 41 coopère avec le rebord 86 de la tête de clip pour s'opposer à un éventuel retrait de l'élément d'accrochage 22 par pivotement inverse vers le haut. Par ailleurs, la gâchette 80 s'oppose à tout basculement supplémentaire de l'élément d'accrochage 22 vers le bas par appui contre l'ergot de butée 44 s'étendant à l'arrière du doigt d'encliquetage 41.

Le clip de fixation 2 selon l'invention est ainsi dans une position parfaitement stable, appelée position de prémontage. Comme représenté sur les figures 1 et 2, c'est dans cette position qu'il est monté sur la baguette 1, préférentiellement au niveau de tronçons de rail de coulissement 17,18 comme expliqué précédemment.

On expliquera maintenant, en référence aux figures schématiques 27 à 34, le montage de la baguette 1 équipée des clips 2 de l'invention sur un support 5 muni d'ouvertures de montage 11 appropriées.

Pour réaliser le montage, on présente les clips de fixation 2 par leur tête de clip 23 en face de la zone large 12 des ouvertures de montage 11 en trou de serrure comme représenté sur les figures 27 et 28.

Comme on le voit sur les figures 29 et 30, les têtes de clip 23 sont engagées à travers la zone large 12 des ouvertures de montage 11. Un ajustement en position du corps du clip 2 par rapport à l'ouverture 11 s'effectue automatiquement par l'effet de la flexibilité des branches 34 et 35 de la structure élastique de butée 33 par rapport aux butoirs 19 et 20 conformés dans les tronçons de rail de coulissement 17 et 18.

Comme déjà indiqué, la structure élastique de butée 33 sert à compenser les écarts de poinçonnage des ouvertures de carrosserie et permet de garantir par déformation que tous les clips de la baguette sont correctement introduits dans les ouvertures de montage correspondantes.

Les têtes de clip 23 sont enfoncées à travers les ouvertures de montage 11 jusqu'à ce que les ailes d'appui 67 et 68 de l'élément d'accrochage 22 arrivent en butée contre les bords de l'ouverture. L'opérateur sait alors que les clips se trouvent à la profondeur idéale pour réaliser l'étape de montage suivante, à savoir le coulissement de la baguette, les bords longitudinaux de la zone étroite 13 de l'ouverture se trouvant à une hauteur intermédiaire entre les rampes inclinées 69, 70 de la base 48 et celles 76, 77 de la tête de clip 23 de chacun des clips.

Par un mouvement de translation de la baguette 2 vers l'avant, on déplace les têtes de clip 23 vers la zone étroite 13 de chaque ouverture de montage 11. Les bords longitudinaux de la zone étroite 13 de cette ouverture viennent en contact de déplacement entre les rampes inclinées 69, 70 de la base 48 et 76, 77 de la tête 23 de chaque clip 2. En raison de la forme de ces rampes, chaque tête de clip 23 garde sa présentation inclinée par rapport à la partie de base 21 en passant le long des bords de la zone étroite 13 de l'ouverture de montage 11.

Lors de ce mouvement, l'un des bords longitudinaux de la zone étroite 13 de l'ouverture vient pousser la gâchette 80 qui pivote vers l'arrière par déformation de son bras flexible 81. La gâchette 80 est alors placée en position escamotée, ce qui libère l'ergot de butée 44 du doigt d'encliquetage 41.

Le fonctionnement de la gâchette 80 est illustré plus spécifiquement sur les figures 24 à 26.

L'opérateur stoppe le mouvement de translation lorsque la saillie avant de butée 84 des têtes de clip 23 bute contre le bord transversal avant par exemple incurvé de la zone étroite 13 des ouvertures de montage 11. La saillie avant de butée 84 se trouve alors en appui contre ce bord transversal.

Dans cette position, représentée sur les figures 31 et 32, les extrémités libres 57, 58 des branches flexibles anti-recul 53 et 54 assurent un contact avec le bord transversal arrière de la zone large 12 des ouvertures de montage 11 par leur pointe 59, 60 et/ou le début de leur rampe d'engagement 61, 62.

Cette position inclinée est fixe et stable en raison d'un appui d'extrémité sur le bord transversal avant de la zone étroite 13 de l'ouverture, de deux appuis d'extrémité sur le bord transversal arrière de la zone large 12 de l'ouverture et des deux appuis quasi-ponctuels de la sous-face de la bordure 72 de la tête de clip 23 sur la portion de carrosserie bordant latéralement l'ouverture de montage 11.

La baguette 2 se trouve alors dans sa première position de montage correspondant à la position écartée de prémontage pour le traitement par cataphorèse.

Le liquide de traitement arrive pratiquement partout car on a limité le plus possible le nombre et l'étendue des surfaces en contact par des saillies de contact de dimensions minimales quasi-ponctuelles.

Lors de la cuisson pendant laquelle la température s'élève à plus de 200°C, l'allongement dû à la dilatation de la baguette 1 s'effectue sans difficulté par mouvement de coulissement des parties de base 21 de chaque clip de fixation 2 sur les tronçons de rail de coulissement 17, 18 de la baguette, pour revenir ensuite après abaissement de la température à la longueur initiale à température ambiante.

Grâce au décalage entre la baguette et la carrosserie en position écartée de prémontage, on peut ensuite appliquer les différentes couches de peinture et/ ou de vernis préférentiellement par un procédé électrostatique.

Après ces opérations de traitement et/ ou de peinture, la mise en position définitive de la baguette 1 s'effectue par simple poussée d'enfoncement sur celle-ci globalement sur toute sa longueur ou successivement au niveau de chaque clip de fixation 2.

Les clips 2 se trouvant déjà en présentation finale devant l'ouverture de montage 11 dès leur mise en position de prémontage, aucun mouvement de translation supplémentaire n'est nécessaire pour passer en position définitive de montage final. On évite ainsi que les couches de cataphorèse et/ou de peinture ou de vernis ne soient raclées lors du mouvement de-mise en position finale.

Lors de cet enfoncement, l'élément basculant d'accrochage 22 pivote vers le bas par réaction de l'appui des extrémités 57 et 58 des branches flexibles anti-recul 53 et 54 qui portent sur le bord transversal arrière de la zone large 12 de l'ouverture 11.

La saillie avant de butée 84 descend de l'autre côté de la tôle par échappement du bord transversal avant de la zone étroite 13 de l'ouverture de montage sur lequel elle était en appui de butée et pour s'y caler par le coin de calage 85.

Les extrémités 57 et 58 des branches flexibles anti-recul 53 et 54 sont comprimées par le franchissement du bord transversal arrière de la zone large 12 de l'ouverture pour venir s'immobiliser en butée contre ce bord par leur ergot de blocage 65, 66 et s'y caler. Cette butée, par la flexibilité des branches anti-recul 53, 54 permet de garder une certaine souplesse dans la fixation.

Parallèlement au cours de cet enfoncement, le doigt d'encliquetage 41 s'enfonce dans l'évidement central 47 de la tête de clip 23 jusqu'à l'encliquetage de sa conformation saillante basse 42 sur le rebord 86 de l'évidement central 47 de la tête de clip 23, garantissant ainsi le verrouillage de l'élément d'accrochage 22 en position basse de montage final et par là le verrouillage de la baguette 1 en position de montage final plaquée contre le support 5.

Cet enfoncement du doigt d'encliquetage 41 est rendu possible par la position escamotée de la gâchette 80 qui autorise la montée de l'ergot de butée 44.

Cette deuxième position plaquée contre la carrosserie 6 correspond à celle de la fixation définitive de la baguette 1 représentée sur les figures 33 et 34. Chaque clip de fixation 2 se trouve alors dans la position représentée sur les figures 16 à 23.

Il y a lieu de remarquer que les deux principales phases du montage s'effectuent pour la première par un coulissement selon la direction X et pour la deuxième par une poussée selon la direction Y.

La baguette 1 ainsi que ses clips de fixation 2 doivent être réalisés dans une matière plastique résistant aux températures importantes rencontrées lors de la cataphorèse.

Les clips de fixation 2 sont moulés d'une pièce par injection indépendamment de la baguette et ne sont pas visibles par l'utilisateur une fois la baguette montée sur la carrosserie. Ils peuvent donc par exemple être renforcés par des fibres de verre.

La matière plastique utilisée pour la réalisation de la baguette et de ses clips de fixation peut également contenir-un additif, du noir de carbone par exemple, lui conférant la conductivité suffisante et nécessaire à la réalisation des étapes de peinture électrostatique.

L'homme du métier pourra sans difficulté imaginer d'autres variantes ou adaptations du clip de fixation à deux positions de maintien selon l'invention, en fonction de l'application souhaitée et des contraintes techniques auxquelles le clip et la baguette porteuse doivent répondre.

Par exemple, les moyens de verrouillage complémentaires portés par la partie de base 21 et l'élément d'accrochage 22 pourront notamment être inversés ou être de nature différente et par exemple comporter un logement creux à la place d'une ou de plusieurs saillie(s) de blocage.

## Revendications

1. Clip de fixation (2) destiné à assurer la fixation sur un support (5), plus particulièrement sur la carrosserie (6) d'un véhicule routier notamment du type automobile à traiter par cataphorèse et/ou à peindre, d'un élément linéaire (1) décoratif et/ou fonctionnel, par exemple du type baguette, bande, moulure, enjoliveur de ceinture de caisse ou de bas de caisse, ce clip de fixation (2) comprenant une partie de base (21) destinée à être rapportée sur la face intérieure (4) de l'élément linéaire (1) et un élément d'accrochage (22) comportant une tête de clip (23) conçue pour coopérer avec une ouverture de montage (11) du type en « trou de serrure présentant une zone large (12) et une zone étroite (13) ménagée en regard dans le support, la partie de base et l'élément d'accrochage comportant des moyens complémentaires de verrouillage (41, 86) conduisant à deux positions stables du clip qui correspondent à deux positions de montage de l'élément linéaire sur son support, à savoir une position écartée de prémontage à distance du support et une position finale d'utilisation plaquée contre le support, le clip de fixation (2) étant **caractérisé en ce que** la partie de base (21) et l'élément d'accrochage (22) sont moulés d'une seule pièce et reliés entre eux de manière articulée par une zone de faible épaisseur (24) formant charnière et permettant le basculement de l'élément d'accrochage par rapport à la partie de base entre une position haute inclinée de prémontage et une position basse de montage final qui correspondent aux deux positions stables du clip.

2. Clip de fixation selon la revendication précédente **caractérisé en ce que** l'élément d'accrochage (22) comporte une tête de clip (23) à évidement central (47), prolongée vers le bas par un corps creux (71) plus étroit dont la partie inférieure s'élargit en une base (48) qui se poursuit à l'arrière par une bande de liaison (49) se prolongeant jusqu'à la zone de faible épaisseur (24) formant charnière.

3. Clip de fixation selon la revendication précédente **caractérisé en ce que** la bande de liaison (49) est bordée par deux nervures de rigidification (50, 51) dont la hauteur augmente progressivement en direction de la tête de clip (23).

4. Clip de fixation selon la revendication 2 ou 3 **caractérisé en ce que** l'élément d'accrochage (22) comporte en outre deux branches anti-recul (53, 54) flexibles, situées de part et d'autre de la bande de liaison (49), présentant chacune une extrémité de raccordement (55, 56) reliée à l'élément d'accrochage (22) et une extrémité libre (57, 58) destinée à coopérer avec le bord transversal arrière de l'ouverture de montage (11).

5. Clip de fixation selon la revendication précédente **caractérisé en ce que** l'extrémité de raccordement (55, 56) de chaque branche anti-recul (53, 54) forme un coude de surélévation de la branche par rapport au plan principal de la bande de liaison (49) et **en ce que** l'extrémité libre (57, 58) de chaque branche anti-recul (53, 54) présente vers le haut une pointe (59, 60) à chant arrière sensiblement plat suivie vers le bas par une rampe descendante d'engagement (61, 62) et un méplat (63, 64) terminé par un ergot de blocage (65, 66) formant ensemble un coin de calage.

6. Clip de fixation selon l'une quelconque des revendications précédentes **caractérisé en ce que** l'élément d'accrochage (22) comporte en outre deux ailes (67, 68) à face supérieure d'appui sensiblement plane, qui s'étendent latéralement une de chaque côté de l'élément d'accrochage (22) et servent de repère de profondeur d'enfoncement de la tête de clip (23), lors du montage de l'élément linéaire (1) sur le support (5).

7. Clip de fixation selon l'une quelconque des revendications 2 à 6 **caractérisé en ce que** l'élément d'accrochage (22) présente de chaque côté, dans le sens allant de l'avant vers l'arrière, d'une part une rampe montante (69, 70) conformée au niveau de la face supérieure de la base (48) et d'autre part, au-dessus de celle-ci et en sous-face de la tête de clip (23), une rampe descendante (76, 77) suivie d'un plat (78, 79), l'ensemble formant une zone d'engagement pour les bords longitudinaux de l'ouverture de montage (11).

8. Clip de fixation selon l'une quelconque des revendications précédentes **caractérisé en ce que** l'élément d'accrochage (22) présente à l'avant, en partie inférieure, une saillie avant de butée (84) de faible largeur, dont la partie supérieure forme avec le front avant de l'élément d'accrochage (22) un coin de calage (85) destiné à recevoir le bord transversal avant de l'ouverture de montage (11) une fois l'élément linéaire (1) plaqué contre le support (5) en position finale d'utilisation.

9. Clip de fixation selon l'une quelconque des revendications 2 à 8 **caractérisé en ce que** la partie de base (21) comporte un doigt d'encliquetage (41) situé en regard de l'évidement central (47) de la tête de clip (23) et adapté pour s'y engager lorsque l'élément d'accrochage (22) bascule en position haute inclinée de prémontage ou en position basse de montage final, et **en ce que** le doigt d'encliquetage (41) et la paroi de l'évidement central (47) comportent des moyens complémentaires de verrouillage (42, 43, 86) conduisant aux deux positions stables du clip.

10. Clip de fixation selon la revendication précédente **caractérisé en ce que** les moyens de verrouillage du doigt d'encliquetage (41) sont deux conformations saillantes en crochet (42, 43) disposées sur son chant avant, qui coopèrent avec un rebord (86) complémentaire faisant saillie de la paroi avant de l'évidement central (47) de la tête de clip (23).

11. Clip de fixation selon la revendication 9 ou 10 **caractérisé en ce que** le doigt d'encliquetage (41) comporte en outre sur son chant arrière un ergot de butée (44) qui coopère avec une butée escamotable de l'élément d'accrochage (22) appelée gâchette (80), afin de bloquer l'élément d'accrochage (22) en position haute inclinée de prémontage jusqu'au coulissement du clip (2) vers la zone étroite (13) de l'ouverture de montage (11).

12. Clip de fixation selon la revendication précédente **caractérisé en ce que** la gâchette (80) est reliée à la tête de clip (23) par un bras flexible (81) permettant le recul de la gâchette (80) en position escamotée par un pivotement élastique vers l'arrière sous l'effet d'un effort de poussée exercé par le bord de l'ouverture de montage (11) lors du coulissement du clip (2) vers la zone étroite (13) de l'ouverture de montage (11).

13. Clip de fixation selon l'une quelconque des revendications précédentes **caractérisé en ce que** la partie de base (21) comporte en outre un plot (46), s'élevant en direction de l'élément d'accrochage (22) et **en ce que** l'élément d'accrochage (22) présente une ouverture (52) en regard de ce plot (46), de façon que le plot s'engage à travers cette ouverture lorsque l'élément d'accrochage (22) bascule vers la partie de base (21).

14. Clip de fixation selon l'une quelconque des revendications précédentes **caractérisé en ce que** la partie de base (21) comporte en partie basse un coulisseau (25) comprenant le long de ses côtés longitudinaux, deux conformations en tube de coulissement (26, 27) destinées à venir s'enclipser chacune sur un tronçon de rail (17, 18) s'étendant longitudinalement sur la face intérieure (4) de l'élément linéaire (1).

15. Clip de fixation selon l'une quelconque des revendications précédentes **caractérisé en ce que** la partie de base (21) comporte en outre une structure élastique de butée (33) permettant un auto-ajustement du clip (2) monté sur l'élément linéaire (1).

16. Clip de fixation selon la revendication précédente **caractérisé en ce que** la structure élastique de butée (33) comporte une arête médiane (32) prolongée par deux branches transversales flexibles (34, 35) dont l'extrémité libre est conformée en crochet (36, 37) et destinée à venir porter chacune à libre coulissement sur un tronçon de rail (17, 18) s'étendant longitudinalement sur la face intérieure (4) de l'élément linéaire (1), et à entrer en contact de butée avec un butoir (19, 20) porté par l'élément linéaire (1).

17. Clip de fixation selon l'une quelconque des revendications précédentes **caractérisé en ce que** la partie de base (21) comporte en outre une platine d'étanchéité (38) qui se trouve à distance du support (5) en position écartée de prémontage et en contact avec celui-ci en position finale d'utilisation.

18. Elément linéaire (2) décoratif ou fonctionnel, par exemple du type baguette, bande, moulure, enjoliveur de ceinture de caisse ou de bas de caisse, destiné à être rapporté contre et monté sur un support (5), et plus particulièrement sur la carrosserie (6) d'un véhicule routier notamment du type automobile à traiter par cataphorèse et/ou à peindre, **caractérisé en ce qu'**il comporte sur sa face intérieure (4) au moins un clip de fixation (11) à deux positions de maintien selon l'une quelconque des revendications précédentes.

## Claims

1. Attachment clip (2) for ensuring the fastening on a support (5), more particularly on the bodywork (6) of a road vehicle in particular an automobile to be treated by cataphoresis and/or to be painted, of a functional and/or decorative linear element (1), for instance of the type stick, band, rail, waistline or underbody decorative screen,
this attachment clip (2) comprising a base part (21) to be attached on the inner face (4) of the linear element (1) and a hooking element (22) including a clip head (23) conceived to co-operate with an assembly opening (11) of the keyhole type presenting a large zone (12) and a narrow zone (13) realized opposite each other in the support,
the base part and the hooking element including complementary locking means (41, 86) leading to two stable positions of the clip which correspond to two assembly positions of the linear element on its support, namely a withdrawn position of pre-assembly distanced from the support and a final position of use pressed against the support,
the attachment clip (2) being **characterized in that** the base part (21) and the hooking element (22) are cast in a single piece and linked to each other in an articulated way by a thin zone (24) forming a hinge and allowing the swinging of the hooking element in relation to the base part between an inclined high position of pre-assembly and a low final assembly position which correspond to the two stable positions of the clip.

2. Attachment clip according to the previous claim **characterized in that** the hooking element (22) includes a clip head (23) with a central hollow (47), prolonged downwards by a narrower hollow body (71) whose lower part widens into a base (48) which proceeds rearwards by a connection band (49) prolonging till the thin zone (24) forming a hinge.

3. Attachment clip according to the previous claim **characterized in that** the connection band (49) is bordered by two stiffening ribs (50, 51) whose height increases progressively in direction of the clip head (23).

4. Attachment clip according to claim 2 or 3 **characterized in that** the hooking element (22) furthermore includes two flexible antireverse branches (53, 54), placed on both sides of the connection band (49), presenting each a connection end (55, 56) linked to the hooking element (22) and a free end (57, 58) intended to co-operate with the rear transverse edge of the assembly opening (11).

5. Attachment clip according to the previous claim **characterized in that** the connection end (55, 56) of each antireverse branch (53, 54) forms a raising elbow of the branch in relation to the main plane of the connection band (49) and **in that** the free end (57, 58) of each antireverse branch (53, 54) upwardly presents a tip (59, 60) with essentially flat rear edge followed downwards by a descending meshing ramp (61, 62) and a flattening (63, 64) terminated by a locking lug (65, 66) together forming a locking wedge.

6. Attachment clip according to any of the preceding claims **characterized in that** the hooking element (22) furthermore includes two wings (67, 68) with essentially plane upper bearing surface, which extend laterally one on each side of the hooking element (22) and serve as a mark of depth for driving in the clip head (23), during the assembly of the linear element (1) on the support (5).

7. Attachment clip according to any of the claims 2 to 6 **characterized in that** the hooking element (22) presents, on each side, from the front to the back, on the one hand a rising ramp (69, 70) in the region of the upper side of the base (48) and on the other hand, above the latter and on the underside of the clip head (23), a descending ramp (76, 77) followed by a flattening (78, 79), the unit forming an insertion area for the longitudinal edges of the assembly opening (11).

8. Attachment clip according to any of the preceding claims **characterized in that** the hooking element (22) in the front, in the lower part, presents a narrow abutting front protrusion (84), the upper part of which forms, with the front side of the hooking element (22), a locking wedge (85), to receive the front transverse edge of the assembly opening (11), once the linear element (1) is pressed against the support (5) in final position of use.

9. Attachment clip according to any of the claims 2 to 8 **characterized in that** the base part (21) includes a locking lug (41) facing the central hollow (47) of the clip head (23) and adapted for meshing into it when the hooking element (22) tilts into the inclined high position of pre-assembly or into the low final assembly position, and **in that** the locking lug (41) and the wall of the central hollow (47) include complementary locking means (42, 43, 86) leading to the two stable positions of the clip.

10. Attachment clip according to the previous claim **characterized in that** the locking means of the locking lug (41) are two hooks (42, 43) disposed on its front edge, which cooperate with a complementary ledge (86) protruding from the wall before the central hollow (47) of the clip head (23).

11. Attachment clip according to claim 9 or 10 **characterized in that** the locking lug (41) furthermore includes, on its rear edge, an abutting lug (44) which cooperates with a retractable stop of the hooking element (22) called tumbler (80), in order to block the hooking element (22) in inclined high position of pre-assembly until the sliding motion of the clip (2) towards the narrow area (13) of the assembly opening (11).

12. Attachment clip according to the previous claim **characterized in that** the tumbler (80) is linked to the clip head (23) by a flexible arm (81) allowing the retreat of the tumbler (80) into invisible position by an elastic rotation backwards under the effect of a pushing effort exercised by the edge of the assembly opening (11) during the sliding motion of the clip (2) towards the narrow area (13) of the assembly opening (11).

13. Attachment clip according to any of the preceding claims **characterized in that** the base part (21) furthermore includes a plug (46), rising in direction of the hooking element (22) and **in that** the hooking element (22) presents an opening (52) facing this plug (46), so that the plug fits across this opening when the hooking element (22) tilts towards the base part (21).

14. Attachment clip according to any of the preceding claims **characterized in that** the base part (21) includes, in the lower part, a slider (25) comprising, along its longitudinal sides, two sliding tubes (26, 27) destined to clip each on a rail section (17, 18) extending longitudinally on the inner face (4) of the linear element (1).

15. Attachment clip according to any of the preceding claims **characterized in that** the base part (21) furthermore includes an abutting elastic structure (33) allowing a self-adjustment of the clip (2) mounted on the linear element (1).

16. Attachment clip according to the previous claim **characterized in that** the abutting elastic structure (33) includes a middle edge (32) prolonged by two flexible transversal branches (34, 35), the free end of which is formed as a hook (36, 37) and intended to make each slide freely on a rail section (17, 18), extending longitudinally on the inner face (4) of the linear element (1), and to abut with a stop (19, 20), carried by the linear element (1).

17. Attachment clip according to any of the preceding claims **characterized in that** the base part (21) furthermore includes a sealing plate (38), which is distanced from the support (5) in withdrawn position of pre-assembly and in contact with the latter in final position of use.

18. Functional or decorative linear element (2), for instance of the type stick, band, rail, waistline or underbody decorative screen, destined to be put against and mounted on a support (5), and more particularly on the bodywork (6) of a road vehicle in particular of the automobile type to be treated by cataphoresis and/or to be painted, **characterized in that** it includes, on its inner face (4), at least one attachment clip (11) with two retaining positions according to any of the preceding claims.

## Patentansprüche

1. Befestigungsclip (2) zur Befestigung einer Zier- und/oder Funktionsleiste (1), zum Beispiel von der Art eines Stabs, Bands, Leiste, Zierblende für die Karosserie-Gürtellinie oder den Unterboden, auf einem Träger (5), genauer auf der Karosserie (6) eines Straßenfahrzeugs, vor allem eines mit Kataphorese zu behandelnden und/oder zu lackierenden Personenkraftwagens, wobei der Befestigungsclip (2) ein Basisteil (21) umfasst, das auf der Innenseite (4) der Leiste (1) aufgesteckt wird, und ein Ankupplungselement (22) mit einem Clipkopf (23), um mit einer Montageöffnung (11) Typ «Schlüsselloch» zusammenzuwirken, mit einem breiten Bereich (12) und einem engen Bereich (13), die einander gegenüberliegend in dem Träger angebracht sind, wobei das Basisteil und das Ankupplungselement komplementäre Verriegelungsmittel (41, 86) umfassen, die zu zwei stabilen Positionen des Clips führen, die zwei Montagepositionen der Leiste auf ihrem Träger entsprechen, nämlich einer geöffneten Vormontageposition von dem Träger entfernt und einer gegen den Träger gepressten Gebrauchsendstellung, wobei der Befestigungsclip (2) **dadurch gekennzeichnet ist, dass** das Basisteil (21) und das Ankupplungselement (22) einstückig geformt und gelenkig miteinander verbunden sind, durch einen schmalen Bereich (24), der ein Scharnier bildet, wodurch das Kippen des Ankupplungselements im Vergleich zu dem Basisteil möglich wird, zwischen einer geneigten hohen Vormontageposition und eine tiefen Endmontageposition, die den zwei stabilen Positionen des Clips entsprechen.

2. Befestigungsclip nach dem vorherigen Anspruch, **gekennzeichnet dadurch dass**, das Ankupplungselement (22) einen Clipkopf (23) mit zentraler Aushöhlung (47) umfasst, der durch einen schmaleren Hohlkörper (71) nach unten verlängert wird, dessen Unterteil sich in eine Basis (48) erweitert, die sich hinten in einem Verbindungsband (49) fortsetzt, das sich bis zu dem schmalem Bereich (24) verlängert, der ein Scharnier bildet.

3. Befestigungsclip nach dem vorherigen Anspruch **gekennzeichnet dadurch, dass** das Verbindungsband (49) von zwei Versteifungsrippen (50, 51) umrandet wird, deren Höhe in Richtung auf den Clipkopf (23) allmählich zunimmt.

4. Befestigungsclip nach Anspruch 2 oder 3, **gekennzeichnet dadurch ,dass** das Ankupplungselement (22) außerdem zwei flexible Rückgleitschutzarme (53, 54) umfasst, auf beiden Seiten des Verbindungsbandes (49), jeder mit einem Verbindungsende (55, 56), das mit dem Ankupplungselement (22) verbunden ist, und einem freien Ende (57, 58), das mit dem hinteren Querrand der Montageöffnung (11) zusammenwirkt.

5. Befestigungsclip nach dem vorherigen Anspruch, **gekennzeichnet dadurch, dass** das Verbindungsende (55, 56) jedes Rückgleitschutzarms (53, 54) einen Hebebogen für den Arm im Verhältnis zu der Hauptebene des Verbindungsbandes (49) bildet, sowie dadurch, dass das freie Ende (57, 58) jedes Rückgleitschutzarms (53, 54) nach oben hin eine Spitze aufweist (59, 60), mit im wesentlichen flacher Hinterkante, nach unten hin gefolgt von einer absteigenden Einführungsrampe (61, 62) und einer Abflachung (63, 64), beendet durch eine Sperrnase (65, 66), die zusammen einen Feststellkeil bilden.

6. Befestigungsclip nach einem beliebigen der vorherigen Ansprüche, **gekennzeichnet dadurch dass** das Ankupplungselement (22) außerdem zwei Flügel (67, 68) mit im wesentlichen ebener Auflageoberseite umfasst, die sich seitlich an je einer Seite des Ankupplungselements (22) erstrecken und bei der Montage der Leiste (1) auf den Träger (5) als Eindringtiefenmarkierung für den Clipkopf (23) dienen.

7. Befestigungsclip nach einem beliebigen der Patentansprüche 2 bis 6, **gekennzeichnet dadurch dass** das Ankupplungselement (22) an jeder Seite, von vorn nach hinten, einerseits eine ansteigende Rampe (69, 70) aufweist, auf Höhe der Oberseite der Basis (48), und andererseits, über letzterer und unter dem Clipkopf (23), eine absteigende Rampe (76, 77), gefolgt von einer Platte (78, 79), wobei das Ganze einen Eingriffsbereich für die Längsränder der Montageöffnung (11) bildet.

8. Befestigungsclip nach einem beliebigen der vorherigen Ansprüche, **gekennzeichnet dadurch, dass** das Ankupplungselement (22) vorn, im unteren Teil, einen vorderen schmalen Anschlagsvorsprung (84) aufweist, dessen Oberteil mit der Vorderfront des Ankupplungselements (22) einen Feststellkeil (85) bildet, der den vorderen Querrand der Montageöffnung (11) aufnehmen soll, wenn die Leiste (1) in Gebrauchsendstellung gegen den Träger (5) gepresst ist.

9. Befestigungsclip nach einem beliebigen der Patentansprüche 2 bis 8, **gekennzeichnet dadurch, dass** das Basisteil (21) einen Rastzapfen (41) gegenüber der zentralen Aushöhlung (47) des Clipkopfes (23) umfasst, um dort einzugreifen, wenn das Ankupplungselement (22) in die geneigte hohe Vormontageposition oder in die tiefe Endmontageposition kippt, sowie dadurch, dass der Rastzapfen (41) und die Wand der zentralen Aushöhlung (47) komplementäre Verriegelungsmittel (42, 43, 86) aufweisen, die zu den beiden stabilen Positionen des Clips führen.

10. Befestigungsclip nach dem vorherigen Anspruch, **gekennzeichnet dadurch, dass** die Verriegelungsmittel des Rastzapfens (41) zwei vorspringende Haken (42, 43) sind, angeordnet auf seiner Vorderkante, die mit einem komplementären Rand (86) zusammenwirken, der aus der Vorderwand der zentralen Aushöhlung (47) des Clipkopfes (23) ragt.

11. Befestigungsclip nach Anspruch 9 oder 10, **gekennzeichnet dadurch, dass** der Rastzapfen (41) außerdem an seiner Hinterkante einen Anschlagstift (44) umfasst, der mit einem versenkbaren Anschlag des Ankupplungselements (22), Abzug (80) genannt, zusammenwirkt, um das Ankupplungselement (22) in geneigter hoher Vormontageposition bis zum Gleiten des Clips (2) in den engen Bereich (13) der Montageöffnung (11) zu blockieren.

12. Befestigungsclip nach dem vorherigen Anspruch, **gekennzeichnet dadurch, dass** der Abzug (80) durch einen flexiblen Arm (81) mit dem Clipkopf (23) verbunden ist, wodurch der Rückzug des Abzuges (80) in die eingezogene Position durch eine elastische Drehung nach hinten unter der Wirkung von einer Schubkraft möglich wird, die vom Rand der Montageöffnung (11) beim Gleiten des Clips (2) in den engen Bereich (13) der Montageöffnung (11) ausgeübt wird.

13. Befestigungsclip nach einem beliebigen der vorherigen Ansprüche, **gekennzeichnet dadurch dass** das Basisteil (21) außerdem eine Noppe (46) umfasst, die sich zum Ankupplungselement (22) hin erhebt, sowie dadurch, dass das Ankupplungselement (22) eine Öffnung (52) bezüglich dieser Noppe (46) aufweist, so dass die Noppe durch diese Öffnung eingreift, wenn das Ankupplungselement (22) zum Basisteil (21) hin kippt.

14. Befestigungsclip nach einem beliebigen der vorherigen Ansprüche, **gekennzeichnet dadurch, dass** das Basisteil (21) im unteren Teil einen Schieber (25) umfasst, der entlang seinen Längsseiten zwei Gleitrohre (26, 27) aufweist, die sich auf je einem Schienenteilstück (17, 18) festclipsen, das sich in Längsrichtung auf der Innenseite (4) der Leiste (1) erstreckt.

15. Befestigungsclip nach einem beliebigen der vorherigen Ansprüche, **gekennzeichnet dadurch, dass** das Basisteil (21) außerdem einen elastische Anschlag (33) umfasst, wodurch eine Selbstjustierung des Clips (2) auf der Leiste (1) möglich wird.

16. Befestigungsclip nach dem vorherigen Anspruch, **gekennzeichnet dadurch, dass** der elastische Anschlag (33) eine mittlere Kante (32) umfasst, verlängert durch zwei flexible Querarme (34, 35), deren freies Ende (36, 37) hakenförmig ist und auf einem Schienenteilstück (17, 18) frei gleitet, das sich in Längsrichtung auf der Innenseite (4) der Leiste (1) erstreckt, und an einem Anschlag (19, 20) anschlägt, der von der Leiste (1) getragen wird.

17. Befestigungsclip nach einem beliebigen der vorherigen Ansprüche, **gekennzeichnet dadurch dass** das Basisteil (21) außerdem eine Dichtmanschette (38) umfasst, entfernt von dem Träger (5) in geöffneter Vormontageposition und in Kontakt mit diesem in Gebrauchsendstellung.

18. Zier- oder Funktionsleiste (2), zum Beispiel von der Art eines Stabs, Bands, Leiste, Zierblende für die Karosserie-Gürtellinie oder den Unterboden, dazu bestimmt, auf einem Träger (5) angebracht und montiert zu werden, genauer gesagt auf der Karosserie (6) eines Straßenfahrzeugs vor allem von der Art eines mit Kataphorese zu behandelnden und/oder zu lackierenden Personenkraftwagens, **gekennzeichnet dadurch, dass** sie auf ihrer Innenseite (4) mindestens einen Befestigungsclip (11) mit zwei Haltepositionen nach einem beliebigen der vorherigen Ansprüche umfasst.
